# EUROPÄISCHE PATENTSCHRIFT

(11) **EP 3 082 179 B1**
(45) Veröffentlichungstag und Bekanntmachung des Hinweises auf die Patenterteilung: **12.06.2019**
(21) Anmeldenummer: 16161177.7
(22) Anmeldetag: 18.03.2016
(51) Int. Cl.: H01M 2/34, H01M 2/30

(54) **BATTERIE MIT PNEUMO-ELEKTRISCHEM SICHERHEITSSCHALTER**
BATTERY WITH ELECTRIC PNEUMO SAFETY SWITCH
BATTERIE AVEC COMMUTATEUR DE SECURITE ELECTROPNEUMATIQUE

(30) Priorität: 17.04.2015 DE 102015207043
(43) Veröffentlichungstag der Anmeldung: 19.10.2016
(73) Patentinhaber: VARTA Microbattery GmbH, 73479 Ellwangen Jagst (DE)
(72) Erfinder: Brenner, Rolf, 73479 Ellwangen (DE); Ernsperger, Jürgen, 73491 Neuler (DE)
(74) Vertreter: Patentanwaltskanzlei Cartagena

(56) Entgegenhaltungen:
- EP-A2- 0 739 047
- DE-A1-102011 089 700
- DE-A1-102012 213 100
- DE-A1-102013 208 555
- JP-A- H1 140 203

## Beschreibung

Die nachfolgend beschriebene Erfindung betrifft eine Batterie mit einem Sicherheitsschalter.

Der Begriff "Batterie" meinte ursprünglich mehrere in Serie geschaltete galvanische Zellen. Heute werden jedoch auch einzelne galvanische Zellen (Einzelzellen) häufig als Batterie bezeichnet. Bei der Entladung einer galvanischen Zelle findet eine energieliefernde chemische Reaktion statt, welche sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt zu einem der Elektrodenreaktion entsprechenden lonenstrom innerhalb der Zelle. Dieser lonenstrom wird durch einen Ionen leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Batterien werden vergleichsweise hohe Energiedichten insbesondere von Lithium-Ionen-Batterien erreicht, also von Batterien, bei denen bei Lade- und Entladeprozessen Lithium-Ionen von einer Elektrode zur anderen wandern. Derartige Batterien eignen sich für den Einsatz in portablen Geräten wie Mobiltelefonen und Notebooks. Weiterhin sind sie aber auch als Energiequelle für Kraftfahrzeuge interessant.

Lithium-Ionen-Batterien für Kraftfahrzeuge weisen häufig ein prismatisches Metallgehäuse auf. Üblicherweise setzt sich das Gehäuse aus einem Behältnis mit einem rechteckigen Boden und vier im rechten Winkel dazu angeordneten Seitenwänden sowie einem Deckel, der im Wesentlichen die gleiche Form und Größe wie der Boden aufweist, zusammen. Der Deckel ist in aller Regel kaum profiliert und kann als näherungsweise eben bezeichnet werden. Meist wird das Gehäuse verschlossen, indem die Ränder des Deckels mit dem Öffnungsrand des Behältnisses verschweißt werden.

In aller Regel weisen die Zellen von Lithium-Ionen-Batterien brennbare Bestandteile auf. So umfasst beispielsweise der Elektrolyt einer Lithium-Ionen-Zelle häufig als Hauptkomponente ein organisches Lösungsmittel wie z.B. Ethylencarbonat. In Verbindung mit der hohen Energiedichte solcher Zellen stellt dies ein nicht zu unterschätzendes Gefahrenpotenzial dar. Es müssen daher besondere Sicherheitsvorkehrungen getroffen werden, um Risiken für Verbraucher auszuschließen oder zumindest möglichst gering zu halten.

Lithium-Ionen-Batterien können durch Überladung in einen kritischen Zustand geraten, in dem unter Umständen Brandgefahr besteht. Die Überladung einer Lithium-Ionen-Batterie kann zur Abscheidung von metallischem Lithium auf der Oberfläche der negativen Elektrode sowie gegebenenfalls zu einer Zersetzung des in der Zelle enthaltenen Elektrolyten führen. Letzteres führt unmittelbar zu einer starken Gasung der Zelle. In Extremfällen kommt es dabei zu einer Schädigung eines die Batterie umgebenden Gehäuses. In der Folge können Feuchtigkeit und Sauerstoff in die Batterie eindringen, was in einer explosionsartigen Verbrennung resultieren kann.

Um dies zu vermeiden, ist es üblich, Lithium-Ionen-Batterien mit Sicherheitseinrichtungen zu versehen. Eine geeignete Schaltungsanordnung zur elektronischen Überwachung der Betriebssicherheit von wiederaufladbaren Lithium-Ionen-Batterien ist beispielsweise aus der DE 101 04 981 A1 bekannt. Die Verwendung von Schmelzsicherungen zur Erhöhung der Sicherheit von Lithium-Ionen-Batterien ist aus der DE 10 2008 020 912 A1 bekannt. Und aus der DE 10 2007 020 905 A1 sind Batterien bekannt, die einen Ableiter aufweisen, der auf einer dünnen Kunststofffolie angeordnet ist und der eine Solltrennstelle aufweist. Verformt sich die Folie, beispielsweise in Folge einer Zellgasung, so wird der Ableiter an der Solltrennstelle zerstört, wodurch die Zelle irreversibel und dauerhaft deaktiviert wird.

Aus der DE 10 2013 208 555 A1 ist eine Sicherheitslösung für Batterien bekannt, gemäß der ein pneumatisch betätigbarer Schalter zum Einsatz kommt. Dieser umfasst bevorzugt zwei elektrische Kontaktelemente, die räumlich voneinander getrennt sind, sowie ein bistabiles, elektrisch leitfähiges Verbindungselement, das in einem ersten Schaltungszustand die beiden Kontaktelemente verbindet und das durch den Druckanstieg in einen zweiten Schaltungszustand überführbar ist, in dem der Kontakt zu mindestens einem der Kontaktelemente unterbrochen ist. Ein Umschalten von dem ersten Schaltungszustand in den zweiten ist nur durch einen ersten äußeren Impuls, beispielsweise den erwähnten Druckanstieg innerhalb des Gehäuses, möglich. Nach dem Umschalten verbleibt das Verbindungselement in dem zweiten Schaltungszustand, auch wenn der erste Impuls nicht mehr auf das Verbindungselement wirkt. Eine Rücküberführung in den ersten Schaltungszustand erfolgt nur, wenn das Verbindungselement einem zweiten äußeren Impuls ausgesetzt ist, der sich vom ersten unterscheidet, beispielsweise einem Druckabfall unter den Ausgangswert. Bevorzugt ist das bistabile Verbindungselement als flache, bistabile Membran ausgebildet.

Der vorliegenden Erfindung lag die Aufgabe zugrunde, Batterien, insbesondere Lithium-Ionen-Batterien, bereitzustellen, die sich durch eine zuverlässige und einfache Sicherheitslösung auszeichnen. Bei den Batterien soll es sich insbesondere um solche mit einem prismatischen Metallgehäuse handeln.

Diese Aufgabe wird gelöst durch die Batterie mit den Merkmalen des Anspruchs 1. Bevorzugte Ausführungsformen der erfindungsgemäßen Batterie sind in den abhängigen Ansprüchen 2 bis 10 angegeben. Der Wortlaut sämtlicher Ansprüche wird hiermit durch Bezugnahme zum Inhalt der vorliegenden Beschreibung gemacht.

Die erfindungsgemäße Batterie weist ein Gehäuse auf sowie in einem oder in dem Innenraum des Gehäuses mindestens eine Einzelzelle mit mindestens einer positiven und mindestens einer negativen Elektrode. Bei der Einzelzelle handelt es sich bevorzugt um eine Zelle auf Lithium-lonen-Basis. Entsprechend ist die erfindungsgemäße Batterie bevorzugt eine Lithium-Ionen-Batterie.

Die Einzelzelle liegt bevorzugt in Form eines Verbundes aus Elektroden- und Separatorfolien mit der Sequenz positive Elektrode / Separator / negative Elektrode vor. Bevorzugt umfassen die Elektroden dabei metallische Stromkollektoren, die meist in Form von zwei- oder dreidimensionalen Flächengebilden vorliegen. Bei Lithium-Ionen-Batterien findet sich etwa auf der Seite der positiven Elektrode bevorzugt ein Netz oder eine Folie aus Aluminium, beispielsweise aus Aluminiumstreckmetall oder einer gelochten Aluminiumfolie. Auf der Seite der negativen Elektrode werden als Stromkollektoren meist Netze oder Folien aus Kupfer verwendet. Grundsätzlich kann die Batterie sowohl einen Zellenstapel (stack) aus mehreren flachen Einzelzellen enthalten, als auch eine oder mehrere gewickelte Einzelzellen (coil).

Das Gehäuse schirmt die mindestens eine Einzelzelle von ihrer Umgebung ab und ist bevorzugt gas- und flüssigkeitsdicht ausgebildet. Bevorzugt weist es eine prismatische Form auf und setzt sich aus einem Behältnis mit einem rechteckigen Boden und vier im rechten Winkel dazu angeordneten Seitenwänden sowie einem Deckel, der im Wesentlichen die gleiche Form und Größe wie der Boden aufweist, zusammen. Besonders bevorzugt besteht es aus einem Metall, insbesondere aus Aluminium oder aus einer Aluminiumlegierung.

Fester Bestandteil einer erfindungsgemäßen Batterie sind in aller Regel ein positiver und/oder ein negativer Polbolzen, die jeweils durch eine Wand des Gehäuses (der Deckel und der Boden des Gehäuses sind ebenfalls als Gehäusewände anzusehen) geführt und mit der mindestens einen positiven und/oder der mindestens einen negativen Elektrode der mindestens einen Einzelzelle elektrisch verbunden sind. In aller Regel weist eine erfindungsgemäße Batterie sowohl einen positiven als auch einen negativen Polbolzen auf. Es ist allerdings auch möglich, dass das Gehäuse selbst als positiver oder negativer Pol dient. In diesem Fall kann eine erfindungsgemäße Batterie auch nur einen positiven Polbolzen oder nur einen negativen Polbolzen aufweisen.

Die Polbolzen bestehen beispielsweise aus einem Metall wie Kupfer. In der Regel sind die Polbolzen durch einen elektrischen Isolator vom Gehäuse elektrisch und mechanisch getrennt, beispielsweise durch eine isolierfähige Masse, wie sie in der DE 100 47 206 A1 beschrieben ist, oder durch eine Kunststofffolie. Sind beide Pole isoliert, so ist das Gehäuse selbst potenzialfrei.

Die erfindungsgemäße Batterie umfasst mindestens einen pneumatisch betätigbaren elektrischen Schalter, der bei einem in dem oder in einem Innenraum des Gehäuses auftretenden Druckanstieg, der über einen Druckschwellenwert hinaus führt, seinen Schaltungszustand von "geschlossen" auf "offen" ändert und dabei die elektrische Verbindung zwischen mindestens einem der Polbolzen und der damit verbundenen mindestens einen Elektrode unterbricht. Bei der vorliegenden Erfindung macht man es sich also zunutze, dass Fehlfunktionen in einer Batterie meist mit der Gasung oder starken Erwärmung einer Zelle und in der Folge einem Druckanstieg innerhalb des Gehäuses einhergehen. Sich ausdehnende und/oder entstehende Gase dienen als "Arbeitsmedium" und können auf den pneumatisch betätigbaren elektrischen Schalter Druck ausüben, bis die erwähnte Änderung des Schaltungszustands erfolgt.

Der Schalter umfasst ein elektrisch leitendes Federelement, das beim Schaltungszustand "geschlossen" einen stabilen ersten Zustand und beim Schaltungszustand "offen" einen stabilen oder metastabilen zweiten Zustand einnimmt und durch einen Druck oberhalb des Druckschwellenwerts vom ersten in den zweiten Zustand überführbar ist. Federelemente mit einem stabilen ersten und einem stabilen zweiten Zustand sind eine Ausführungsform eines bistabilen Systems. Federelemente mit einem stabilen ersten und einem metastabilen zweiten Zustand sind auch unter der Bezeichnung "Knackfrosch" bekannt.

Das Federelement besteht bevorzugt aus einem Metall, insbesondere aus einem Federstahl.

Die Eignung, den ersten und den zweiten Zustand einnehmen zu können, wird bevorzugt durch eine entsprechende Prägung des Federelements herbeigeführt. Der zweite Zustand ist stabil, wenn das Federelement auch dann im zweiten Zustand verbleibt, wenn der Druck innerhalb des Gehäuses wieder auf einen Wert unterhalb des Druckschwellenwerts absinkt. Metastabil bedeutet dagegen, dass der zweite Zustand automatisch zu Gunsten des ersten Zustands aufgegeben wird, sobald der Druckschwellenwert von oben nach unten passiert wird.

Im ersten Zustand verbindet das Federelement zwei Kontaktelemente der in Folge des Druckanstiegs zu unterbrechenden elektrischen Verbindung elektrisch miteinander. Im zweiten Zustand ist es dagegen von mindestens einem der Kontaktelemente, gegebenenfalls auch von beiden, räumlich beabstandet, so dass keine elektrische Verbindung zwischen den zwei Kontaktelementen mehr besteht.

Weiterhin umfasst der Schalter eine Membran, mit deren Hilfe der ansteigende Druck erfasst und auf das Federelement übertragen werden kann. Diese Membran ist bevorzugt gasundurchlässig. Weiterhin ist es bevorzugt, dass die Membran elektrisch leitfähig ist.

Bei der Membran kann es sich beispielsweise um eine Metallfolie, beispielsweise eine Aluminiumfolie, oder um eine metallbeschichtete Folie, handeln. Wird eine Seite einer derartigen Membran mit Druck beaufschlagt, so wölbt sich die Membran in Richtung der nicht mit Druck beaufschlagten Seite.

Erfindungsgemäß weist das Federelement weist die folgenden Merkmale auf:
- Es weist einen Boden mit einem zentralen, kreisförmigen Bodenbereich und mit einem um diesen herum angeordneten ringförmigen Bodenbereich, welcher einen inneren und einen äußeren Rand aufweist, auf.
- Der Boden ist durch einen Druck auf den kreisförmigen Bodenbereich aus einem stabilen konvexen Zustand, in dem der kreisförmige Bodenbereich unterhalb einer vom äußeren Rand des ringförmigen Bodenbereichs aufgespannten Ebene angeordnet ist, in einen stabilen konkaven Zustand, in dem der kreisförmige Bodenbereich oberhalb einer vom äußeren Rand des ringförmigen Bodenbereichs aufgespannten Ebene angeordnet ist, überführbar.
   Der stabile konvexe Zustand des Bodens entspricht dem stabilen ersten Zustand des Federelements. Der stabile konkave Zustand des Bodens entspricht dem stabilen zweiten Zustand des Federelements.

Das Federelement ist dabei nach einer erfindungsgemäßen ersten Variante nach Art eines Bechers ausgebildet und
- weist eine umlaufende Seitenwand und eine durch einen freien Rand der Seitenwand (den oberen, endständigen Rand der Seitenwand) definierte Öffnung auf, wobei
- die Seitenwand durch axiale, sich bevorzugt über die gesamte Höhe der Seitenwand erstreckende Schlitze in radiale Segmente unterteilt ist, wobei die einzelnen Segmente auf dem äußeren Rand des ringförmigen Bodenbereichs aufsitzen.

Bevorzugt umfasst die Seitenwand mindestens 10 und nicht mehr als 20 radiale Segmente. Weiter bevorzugt umfasst die Seitenwand mindestens 12 und nicht mehr als 16 radiale Segmente.

Zur Klarstellung: Im Rahmen der gewählten Terminologie ist der Boden das untere Ende des Federelements, während die durch den Rand der Seitenwand definierte Öffnung das obere Ende darstellt. Wenn der kreisförmige Bodenbereich "oberhalb" der vom äußeren Rand des ringförmigen Bodenbereichs aufgespannten Ebene angeordnet ist, so weist er entsprechend "nach oben" in Richtung der Öffnung. Ist er dagegen "unterhalb" der Ebene angeordnet, so weist er weg von der Öffnung "nach unten".

Bei einem ausreichend starken Druck auf den kreisförmigen Bodenbereich springt dieser aus seiner Position unterhalb der vom äußeren Rand des ringförmigen Bodenbereichs aufgespannten Ebene in eine Position oberhalb der Ebene. Die ursprüngliche Form des Bodens wird dabei invertiert, aus einem konvexen Zustand wird ein konkaver, aus einem ansteigenden ringförmigen Bodenbereich wird durch ein Umklappen ein abfallender. Beim Übergang in den konkaven Zustand ändern der kreisförmige und der ringförmige Bodenbereich ihre Position relativ zueinander, wohingegen die relative Positionierung des ringförmigen Bodenbereichs und der einzelnen Segmente der Seitenwand zueinander unverändert bleibt. Insbesondere bleibt auch der Winkel, den der ringförmige Bereich und die Seitenwand einschließen, konstant. Das Umklappen des ringförmigen Bereichs bedingt daher gleichzeitig ein nach außen Klappen der radialen Segmente der Seitenwand. Die vom Rand der Seitenwand definierte Öffnung weitet sich entsprechend radial.

In einer zweiten, zur ersten alternativen erfindungsgemäßen Variante zeichnet sich der Schalter dadurch aus, dass das Federelement zwar einen Boden wie das nach Art des Bechers ausgebildete Federelement aufweist, allerdings keine ausschließlich durch die axialen Schlitze in radiale Segmente unterteilte Seitenwand. Die axialen Schlitze sind bei dieser Variante teilweise oder vollständig durch Lücken zwischen den einzelnen Segmenten ersetzt, die so breit wie die Segmente selbst oder gar breiter ausgebildet sind. So sind beispielsweise in einer möglichen Ausführungsform benachbarte Segmente jeweils durch eine solche Lücke getrennt.

In einer dritten erfindungsgemäßen Variante werden Federelemente eingesetzt, die an Stelle einer umlaufenden Seitenwand nur ein Segment oder gegebenenfalls nur zwei (vorzugsweise sich radial gegenüberstehende) Segmente aufweisen. Solange gewährleistet ist, dass die beschriebene Inversion des Bodens aus dem konvexen in den konkaven Zustand dazu führt, dass dieses Segment oder diese Segmente eine Klappbewegung beschreiben und ihre Position relativ zu einem Bezugspunkt im Umfeld des Federelements ändern, sind auch solche Federelemente im Rahmen der vorliegenden Erfindung einsetzbar.

In möglichen Weiterbildungen der ersten sowie teilweise auch der zweiten besonders bevorzugten Ausführungsform sowie in Übereinstimmung mit obigen Ausführungen kann das Federelement zusätzlich noch mindestens eines der folgenden Merkmale aufweisen:
- Wenn das Federelement in dem ersten Zustand ist, steigt der ringförmige Bodenbereich in Richtung seines äußeren Randes an, vorzugsweise in einem Winkel zwischen 0,5° und 5° zur Horizontalen.
- Wenn das das Federelement in dem zweiten Zustand ist, fällt der ringförmige Bodenbereich in Richtung seines äußeren Randes ab, vorzugsweise in einem Winkel zwischen 0,5° und 4° zur Horizontalen.
- Der ringförmige Bereich und das oder die Segmente der Seitenwand schließen bevorzugt einen Winkel zwischen 90° und 100° ein.
- Wenn das Federelement in dem zweiten Zustand ist, hat die durch den Rand der Seitenwand definierte Öffnung einen größeren Durchmesser als im stabilen ersten Zustand.

Bevorzugt ist eines der zwei Kontaktelemente der in Folge des Druckanstiegs zu unterbrechenden elektrischen Verbindung der Polbolzen. Vorzugsweise wird im ersten Zustand des Federelements ein Teil des Polbolzens von mindestens einem Segment des Federelements kontaktiert während im zweiten Zustand des Federelements das oder die Segmente des Federelements von dem Polbolzen räumlich beabstandet sind. Besonders bevorzugt wird im ersten Zustand des Federelements der Teil des Polbolzens von den Segmenten der Seitenwand radial umschlossen.

Bevorzugt ist das zweite der zwei Kontaktelemente der in Folge des Druckanstiegs zu unterbrechenden elektrischen Verbindung die Membran. Diese weist bevorzugt mindestens eines der folgenden Merkmale auf:
- Sie ist durch den Druckanstieg in dem Innenraum mit der mindestens einen Einzelzelle in einen gewölbten Zustand überführbar.
- Sie ist mit dem Federelement derart gekoppelt, dass sie im Falle einer Wölbung Druck auf den kreisförmigen Bodenbereich des Federelements ausüben kann.
- Sie ist mit dem Federelement, insbesondere mit dem kreisförmigen Bodenbereich des Federelements, unmittelbar verbunden, insbesondere verschweißt.

Die Membran ist bevorzugt sowohl mit dem Federelement als auch mit einer der Elektroden elektrisch verbunden.

In bevorzugten Ausführungsformen sind das Federelement sowie der Teil des Polbolzens, an dem im ersten Zustand ein elektrischer Kontakt mit dem Federelement besteht, in einem Hohlraum innerhalb des Gehäuses oder in einem Hohlraum innerhalb einer Wand des Gehäuses angeordnet sind, der über die Membran mit dem Innenraum, in dem die mindestens eine Einzelzelle angeordnet ist, in kommunizierender Verbindung steht.

In weiteren bevorzugten Ausführungsformen umfasst die Batterie ein Entlüftungsmittel, über das ein Druckausgleich zwischen dem Hohlraum und der Gehäuseaußenseite erfolgen kann, insbesondere in Form einer durch den Polbolzen führenden Bohrung oder eines in den Polbolzens integrierten Ventils.

Weitere Merkmale der Erfindung sowie aus der Erfindung resultierende Vorteile ergeben sich aus der nachfolgenden Beschreibung der Zeichnungen, anhand derer die Erfindung illustriert wird. Die nachfolgend beschriebenen Ausführungsformen dienen lediglich zur Erläuterung und zum besseren Verständnis der Erfindung und sind in keiner Weise einschränkend zu verstehen.

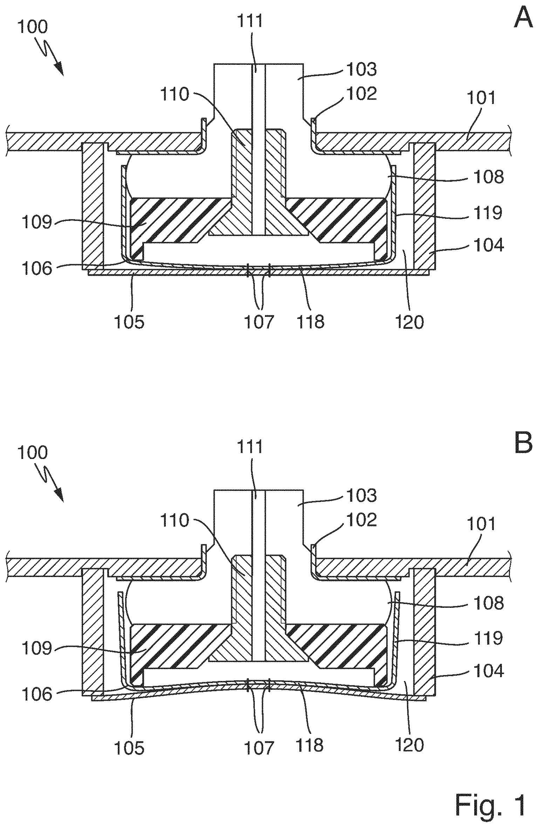

Fig. 1 zeigt ausschnittsweise einen Querschnitt einer erfindungsgemäßen Batterie 100 mit einem pneumatisch betätigbaren elektrischen Schalter (schematische Darstellung). Zeichnung A zeigt die Batterie mit geschlossenem Schalter, Zeichnung B zeigt die Batterie mit geöffnetem Schalter.

Die erfindungsgemäße Batterie 100 umfasst eine Gehäusewand 101, durch die ein positiver, aus Kupfer bestehender Polbolzen 103 von innen nach außen (in der Darstellung von unten nach oben durch die Gehäusewand 101) geführt ist. Die elektrisch isolierende Folie 102 trennt die Wand 101 und den Polbolzen 103 voneinander. Der durch die Wand 101 nach außen ragende Teil des Polbolzens kann beispielsweise mit einer Mutter (nicht dargestellt) gekontert werden, um ein Zurückrutschen des Polbolzens 103 durch die Wand 101 ins Innere des Gehäuses zu verhindern.

Der unterhalb der Wand 101 im Inneren des Gehäuses angeordnete Teil des Polbolzens 103 ist in einem Hohlraum 120 angeordnet. Dieser ist aus der Wand 101, der zylindrischen Metallhülse 104 und der Membran 105, die die Unterseite der zylindrischen Hülse 104 verschließt, gebildet. Die Membran 105 und die Hülse 104 bilden hierbei eine gasdichte Barriere zwischen dem Hohlraum und dem Innenraum des Gehäuses, in dem die mindestens eine Einzelzelle (nicht dargestellt) angeordnet ist. Sowohl die Gehäusewand 101 als auch die zylindrische Hülse 104 und die Membran 105 bestehen aus Aluminium. Sie sind bevorzugt durch Verschweißung miteinander verbunden.

Innerhalb des Hohlraums 120 ist das Federelement 106 angeordnet. Dieses hat die Form eines Bechers mit einem Boden 118 und einer aus mehreren Einzelsegmenten gebildeten Seitenwand 119, die, wenn der Schalter geschlossen (A) ist, eine zylindrische Geometrie aufweist. Die Membran 105 ist an den Punkten 107 mit dem Boden 118 des becherförmigen Federelements 106 verschweißt.

Wenn der Schalter geschlossen ist (A), so steht die Seitenwand 119 am Punkt 108 in unmittelbarem Kontakt mit dem Polbolzen 103. Die Seitenwand 119 überspannt hierbei die Isolierscheibe 109, die mittels der Senkschraube 110 an die Unterseite des Polbolzens 103 fixiert ist.

Bildet sich im an die Membran 105 angrenzenden Innenraum des Gehäuses ein Überdruck, so wölbt sich die Membran 105 in den Hohlraum 120, in dem das Federelement 106 angeordnet ist, und übt dabei auf den Boden 118 des Federelements 106 einen unmittelbaren Druck aus. Überschreitet der von der Membran 105 übertragene Druck einen Druckschwellenwert, so springt das Federelement 106 aus einem ersten stabilen Zustand (A), in dem der Boden 118 eine insgesamt konvexe Form aufweist, in einen zweiten stabilen Zustand (B), in dem der Boden konkav ausgebildet ist (A→B). Dadurch bedingt klappen die Segmente der Seitenwand 119 radial nach außen, so dass am Punkt 108 kein Kontakt mehr zwischen dem Federelement 106 und dem Polbolzen 103 besteht. Der Schalter ist nun geöffnet.

Der von der Wand 101, der Hülse 104 und der Membran 105 gebildete Hohlraum 120 ist über eine Bohrung 111 mit der Gehäuseaußenseite verbunden. Die Bohrung 111 dient zum einen dazu, der Bildung eines Drucks innerhalb des Hohlraums 120 entgegenzuwirken. Zum anderen kann die Bohrung 111 aber auch dazu benutzt werden, das Federelement 106 aus dem stabilen zweiten Zustand (B) in den stabilen ersten Zustand (A) zu überführen und den in Folge des Überdrucks geöffneten Schalter somit wieder zu schließen.

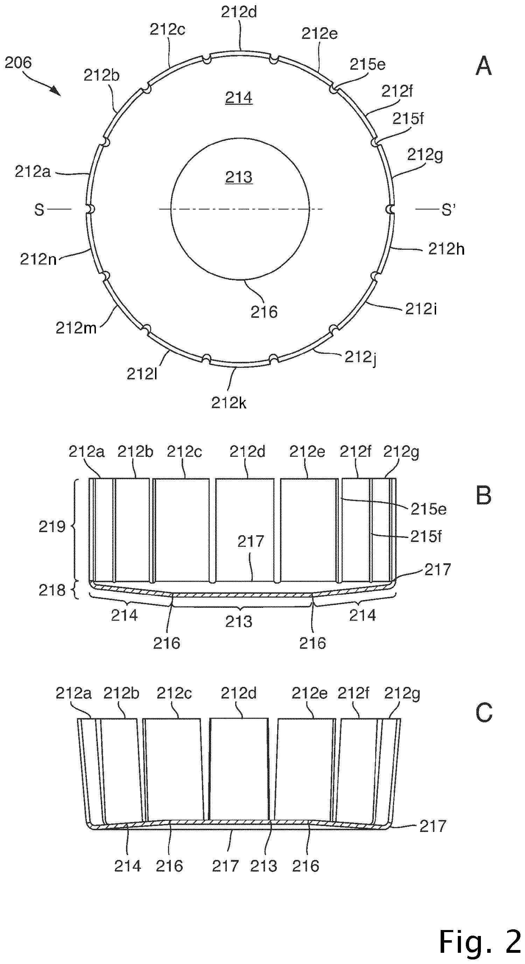

Das in dem in Fig. 1 dargestellten Schalter zum Einsatz kommende Federelement ist in Fig. 2 als Federelement 206 (schematische Darstellung) näher beschrieben. In den Zeichnungen A und B ist das Federelement 206 im ersten stabilen Zustand (entspricht der in Fig. 1A dargestellten Ausführungsform) dargestellt. Zeichnung C zeigt das Federelement 206 im zweiten stabilen Zustand (entspricht der Ausführungsform gemäß Fig. 1B).

Zeichnung A ist eine Aufsicht auf das Federelement 206 (senkrecht von oben). Im Zentrum des Bodens befindet sich ein kreisförmiger Bodenbereich 213. Dieser wird von dem ringförmigen Bodenbereich 214 umgeben. Die Knicklinie 216 bildet die Grenze zwischen den beiden Bereichen 213 und 214 sowie gleichzeitig den inneren Begrenzungsrand des Bereichs 214. Auf dem äußeren Rand des Bereichs 214 sitzen die Segmente 212a bis 212n auf, die zusammen die umlaufende Seitenwand 219 des becherförmigen Federelements 206 bilden. Die einzelnen Segmente 212a bis 212n sind jeweils durch axiale Schlitze voneinander getrennt. So befindet sich beispielsweise der Schlitz 215e zwischen den Segmenten 212e und 212f. Zwischen den Segmenten 212f und 212g befindet sich der axiale Schlitz 215f.

Bei Zeichnung B handelt es sich um eine Querschnittsdarstellung des in Zeichnung A senkrecht von oben dargestellten Federelements 206 (Schnitt entlang der Linie S-S'). Die Segmente 212a bis 212g sitzen auf dem äußeren Rand 217 des ringförmigen Bodenbereichs 214 auf und bilden zusammen die Seitenwand 219. Der ringförmige Bodenbereich 214 bildet gemeinsam mit dem kreisförmigen zentralen Bodenbereich 212 den Boden 218 des Federelements 206 aus, der sich konvex nach unten wölbt.

Beim Ausüben eines ausreichend hohen Drucks auf den kreisförmigen Bodenbereich 213 springt dieser nach oben ins Innere des becherförmigen Federelements. Während er in dem in Zeichnung B dargestellten Zustand unterhalb einer vom Rand 217 aufgespannten Ebene angeordnet ist, ist er in Zeichnung C oberhalb dieser Ebene angeordnet. Der ringförmige Bereich 214, der in der in Zeichnung B dargestellten Ausführungsform ausgehend von der Knicklinie 216 in Richtung seines äußeren Randes 217 einen ansteigenden Verlauf zeigt, fällt nun in der gleichen Richtung nach außen ab. Da sich durch das Hochspringen des kreisförmigen Bereichs 213 lediglich dessen relative Position zu allen anderen Komponenten des Federelements 206 verändert, nicht jedoch die relative Position der Segmente 212a bis 212n zu dem ringförmigen Bodenbereich 214, klappen die Segmente 212a bis 212n radial nach außen, wobei sich die durch die Segmente 212a bis 212n definierte kreisrunde Öffnung des becherförmigen Federelements 206 radial weitet.

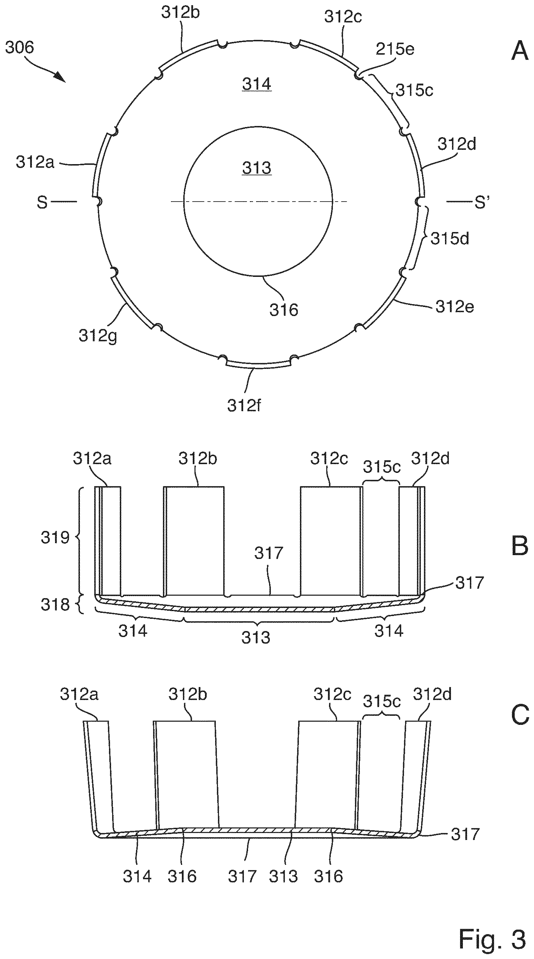

In Fig. 3 ist eine weitere Ausführungsform eines Federelements dargestellt (schematische Darstellung), das im Rahmen der vorliegenden Erfindung Verwendung finden kann. Von dem in Fig. 2 dargestellten Federelement unterscheidet es sich darin, dass es keine geschlossene umlaufende Seitenwand aufweist. Die Segmente 312a bis 312g sind jeweils nicht durch axiale Schlitze voneinander getrennt, sondern durch Lücken, die jeweils so breit sind wie die jeweils benachbarten Segmente.

Die Funktionsfähigkeit des Federelements 306 wird hierdurch nicht beeinträchtigt. Wie vorstehend ausgeführt, wäre es sogar denkbar, im Rahmen der vorliegenden Erfindung Federelemente mit nur einem oder mit nur zwei (vorzugsweise sich gegenüberstehenden) Segmenten einzusetzen.

## Patentansprüche

1. Batterie (100) mit den folgenden Merkmalen:
- Sie umfasst ein Gehäuse,
- sie umfasst mindestens eine Einzelzelle mit mindestens einer positiven und mindestens einer negativen Elektrode, die in einem Innenraum innerhalb des Gehäuses angeordnet ist,
- sie umfasst einen durch eine Wand (101) des Gehäuses geführten positiven Polbolzen (103), der mit der mindestens einen positiven Elektrode elektrisch verbunden ist und/oder einen durch eine Wand des Gehäuses geführten negativen Polbolzen, der mit der mindestens einen negativen Elektrode elektrisch verbunden ist, und
- sie umfasst mindestens einen pneumatisch betätigbaren elektrischen Schalter, der bei einem in dem Innenraum des Gehäuses auftretenden Druckanstieg über einen Druckschwellenwert hinaus seinen Schaltungszustand von "geschlossen" auf "offen" ändert und dabei die elektrische Verbindung zwischen mindestens einem der Polbolzen (103) und der damit verbundenen mindestens einen Elektrode unterbricht,
wobei
- der Schalter ein elektrisch leitendes Federelement (106; 206) umfasst, das beim Schaltungszustand "geschlossen" einen stabilen ersten Zustand und beim Schaltungszustand "offen" einen stabilen oder metastabilen zweiten Zustand einnimmt und durch einen Druck oberhalb des Druckschwellenwerts vom ersten in den zweiten Zustand überführbar ist,
- das Federelement (106; 206) im ersten Zustand zwei Kontaktelemente (103) und (105) der in Folge des Druckanstiegs zu unterbrechenden elektrischen Verbindung miteinander elektrisch verbindet und im zweiten Zustand von mindestens einem der Kontaktelemente räumlich beabstandet ist, und
- der Schalter eine Membran (105) umfasst, mit deren Hilfe der ansteigende Druck erfasst und auf das Federelement (106; 206) übertragen werden kann,
**dadurch gekennzeichnet, dass** das Federelement (106; 206)
- einen Boden (118) mit einem zentralen, kreisförmigen Bodenbereich (213) und mit einem um diesen herum angeordneten ringförmigen Bodenbereich (214), welcher einen inneren Rand (216) und einen äußeren Rand (217) aufweist und
- der Boden (118) durch einen Druck auf den kreisförmigen Bodenbereich (213) aus einem konvexen Zustand, in dem der kreisförmige Bodenbereich (213) unterhalb einer vom äußeren Rand (217) des ringförmigen Bodenbereichs (214) aufgespannten Ebene angeordnet ist, in einen konkaven Zustand, in dem der kreisförmige Bodenbereich (213) oberhalb einer vom äußeren Rand (217) des ringförmigen Bodenbereichs (214) aufgespannten Ebene angeordnet ist, überführbar ist, und
wobei
- das Federelement nach Art eines Bechers ausgebildet ist und
- eine umlaufende Seitenwand (119; 219) und eine durch einen freien Rand (221) der Seitenwand (119) definierte Öffnung aufweist und
- die Seitenwand (119; 219) durch axiale Schlitze (215) in radiale Segmente (212a - 212n) unterteilt ist, wobei die einzelnen Segmente (212a - 212n) auf dem äußeren Rand (217) des ringförmigen Bodenbereichs (214) aufsitzen,
oder
- das Federelement an Stelle der durch die axialen Schlitze unterteilten Seitenwand eine Seitenwand aufweist, bei der die axialen Schlitze teilweise oder vollständig durch Lücken zwischen den einzelnen Segmenten ersetzt sind, die so breit wie die Segmente selbst oder breiter ausgebildet sind,
oder
- das Federelement an Stelle der umlaufenden Seitenwand nur eines der Segmente aufweist.

2. Batterie nach Anspruch 1, **dadurch gekennzeichnet, dass**
- sich der Boden (118; 218) in dem konvexen Zustand befindet, wenn das Federelement (106; 206) in dem stabilen ersten Zustand ist,
und
- sich der Boden (118; 218) in dem konkaven Zustand befindet, wenn das Federelement (106; 206) in dem stabilen zweiten Zustand ist.

3. Batterie nach einem der vorhergehenden Ansprüche, **dadurch gekennzeichnet, dass** das Federelement (106; 206) zusätzlich mindestens eines der folgenden Merkmale aufweist:
- eine Knicklinie (216) bildet die Grenze zwischen dem kreisförmigen (213) und dem ringförmigen (214) Bodenbereich,
- wenn das Federelement (106; 206) in dem ersten Zustand ist, steigt der ringförmige Bodenbereich (214) in Richtung seines äußeren Randes (217) an,
- wenn das Federelement (106; 206) in dem zweiten Zustand ist, fällt der ringförmige Bodenbereich (214) in Richtung seines äußeren Randes (217) ab,
- der ringförmige Bereich (214) und die Seitenwand (119; 219) schließen einen Winkel zwischen 90° und 100° ein, und
- wenn das Federelement (106; 206) in dem zweiten Zustand ist, hat die durch den Rand (221) der Seitenwand (119; 219) definierte Öffnung einen größeren Durchmesser als im ersten Zustand.

4. Batterie nach einem der vorhergehenden Ansprüche, **dadurch gekennzeichnet, dass** eines der zwei Kontaktelemente der Polbolzen (103) ist, zu dem die elektrische Verbindung zu unterbrechen ist.

5. Batterie nach Anspruch 4, **dadurch gekennzeichnet, dass**
- im ersten Zustand des Federelements (106; 206) ein Teil des Polbolzens (103) von den Segmenten der Seitenwand (119; 219) radial umschlossen wird, wobei mindestens eines der Segmente unmittelbar an dem Polbolzen (103) anliegt und diesen elektrisch kontaktiert
und
- im zweiten Zustand des Federelements die Segmente der Seitenwand von dem Polbolzen (103) räumlich beabstandet sind.

6. Batterie nach einem der vorhergehenden Ansprüche, **dadurch gekennzeichnet, dass** eines der zwei Kontaktelemente die Membran (105) ist.

7. Batterie nach einem der vorhergehenden Ansprüche, **dadurch gekennzeichnet, dass** die Membran (105) mindestens eines der folgenden Merkmale aufweist:
- Sie ist durch den Druckanstieg in dem Innenraum mit der mindestens einen Einzelzelle in einen gewölbten Zustand überführbar,
- sie ist mit dem Federelement (106; 206) derart gekoppelt, dass sie im Falle einer Wölbung Druck auf den kreisförmigen Bodenbereich (213) des Federelements (106; 206) ausüben kann,
- sie ist mit dem Federelement (106; 206), unmittelbar verbunden.

8. Batterie nach einem der Ansprüche 4 bis 7, **dadurch gekennzeichnet, dass** das Federelement (106; 206; 306) sowie der Teil des Polbolzens (103), an dem im ersten Zustand ein elektrischer Kontakt mit dem Federelement (106; 206) besteht, in einem Hohlraum (120) innerhalb des Gehäuses oder in einem Hohlraum innerhalb einer Wand des Gehäuses angeordnet sind, der über die Membran (105) mit dem Innenraum, in dem die mindestens eine Einzelzelle angeordnet ist, in kommunizierender Verbindung steht.

9. Batterie nach Anspruch 8, **dadurch gekennzeichnet, dass** sie ein Entlüftungsmittel (111) umfasst, über das ein Druckausgleich zwischen dem Hohlraum (120) und der Gehäuseaußenseite erfolgen kann.

## Claims

1. Battery (100) having the following features:
- it comprises a housing,
- it comprises at least one single cell having at least one positive and at least one negative electrode, which is arranged in an interior inside the housing,
- it comprises a positive pole stud (103), led through a wall (101) of the housing, that is electrically connected to the at least one positive electrode and/or a negative pole stud, led through a wall of the housing, that is electrically connected to the at least one negative electrode, and
- it comprises at least one pneumatically operable electrical switch that responds to a pressure rise beyond a pressure threshold value that arises in the interior of the housing by changing its switching state from "closed" to "open" and in so doing interrupts the electrical connection between at least one of the pole studs (103) and the at least one electrode connected thereto,
wherein
- the switch comprises an electrically conductive spring element (106; 206) that adopts a stable first state in the "closed" switching state and a stable or metastable second state in the "open" switching state and is transferrable from the first to the second state by a pressure above the pressure threshold value,
- the spring element (106; 206) electrically connects two contact elements (103) and (105) of the electrical connection that is to be interrupted as a result of the pressure rise to one another in a first state and is at a physical distance from at least one of the contact elements in the second state, and
- the switch comprises a membrane (105) that can be used to detect the rising pressure and to transfer it to the spring element (106; 206),
**characterized in that** the spring element (106; 206)
- has a base (118) having a central, circular base area (213) and having an annular base area (214), arranged around the latter, that has an inner edge (216) and an outer edge (217), and
- the base (118) is transferrable from a convex state, in which the circular base area (213) is arranged below a plane defined by the outer edge (217) of the annular base area (214), to a concave state, in which the circular base area (213) is arranged above a plane defined by the outer edge (217) of the annular base area (214), by a pressure on the circular base area (213), and
wherein
- the spring element is designed in the style of a cup and
- has a circumferential side wall (119; 219) and an opening defined by a free edge (221) of the side wall (119), and
- the side wall (119; 219) is divided into radial segments (212a - 212n) by axial slots (215), the individual segments (212a - 212n) being seated on the outer edge (217) of the annular base area (214),
or
- the spring element has, instead of the side wall divided by the axial slots, a side wall at which the axial slots are partly or completely replaced by gaps between the individual segments that are designed to be as wide as the segments themselves or wider,
or
- the spring element has only one of the segments instead of the circumferential side wall.

2. Battery according to Claim 1, **characterized in that**
- the base (118; 218) is in the convex state when the spring element (106; 206) is in the stable first state,
and
- the base (118; 218) is in the concave state when the spring element (106; 206) is in the stable second state.

3. Battery according to either of the preceding claims, **characterized in that** the spring element (106; 206) additionally has at least one of the following elements:
- a fold line (216) forms the boundary between the circular (213) and the annular (214) base area,
- when the spring element (106; 206) is in the first state, the annular base area (214) rises in the direction of its outer edge (217),
- when the spring element (106; 206) is in the second state, the annular base area (214) falls in the direction of its outer edge (217),
- the annular area (214) and the side wall (119; 219) form an angle of between 90° and 100°, and
- when the spring element (106; 206) is in the second state, the opening defined by the edge (221) of the side wall (119; 219) has a greater diameter than in the first state.

4. Battery according to one of the preceding claims, **characterized in that** one of the two contact elements is the pole stud (103) in respect of which the electrical connection is to be interrupted.

5. Battery according to Claim 4, **characterized in that**
- in the first state of the spring element (106; 206), a portion of the pole stud (103) is radially surrounded by the segments of the side wall (119; 219), at least one of the segments being directly adjacent to the pole stud (103) and making electrical contact therewith, and
- in the second state of the spring element, the segments of the side wall are at a physical distance from the pole stud (103).

6. Battery according to one of the preceding claims, **characterized in that** one of the two contact elements is the membrane (105).

7. Battery according to one of the preceding claims, **characterized in that** the membrane (105) has at least one of the following features:
- it is transferrable to a domed state by the pressure rise in the interior with the at least one single cell,
- it is coupled to the spring element (106; 206) such that it can exert pressure on the circular base area (213) of the spring element (106; 206) in the event of a dome,
- it is connected to the spring element (106; 206) directly.

8. Battery according to one of Claims 4 to 7, **characterized in that** the spring element (106; 206; 306) and the portion of the pole stud (103) at which there is electrical contact with the spring element (106; 206) in the first state are arranged in a cavity (120) inside the housing or in a cavity inside a wall of the housing that is communicatively connected via the membrane (105) to the interior in which the at least one single cell is arranged.

9. Battery according to Claim 8, **characterized in that** it comprises a vent means (111) via which pressure equalization between the cavity (120) and the outside of the housing can take place.

## Revendications

1. Batterie (100) présentant les caractéristiques suivantes:
- elle comprend un boîtier,
- elle comprend au moins une cellule individuelle avec au moins une électrode positive et au moins une électrode négative, qui sont disposées dans un espace intérieur à l'intérieur du boîtier,
- elle comprend une borne polaire positive (103) menée à travers une paroi (101) du boîtier, qui est reliée électriquement à ladite au moins une électrode positive et/ou une borne polaire négative menée à travers une paroi du boîtier, qui est reliée électriquement à ladite au moins une électrode négative, et
- elle comprend au moins un commutateur électrique à commande pneumatique, qui lorsqu'il se produit une hausse de la pression au-delà d'une valeur de seuil de pression dans l'espace intérieur du boîtier change son état de commutation de "fermé" à "ouvert" et interrompt ainsi la liaison électrique entre au moins une des bornes polaires (103) et ladite au moins une électrode reliée à celle-ci,
dans laquelle
- le commutateur comprend un élément de ressort électriquement conducteur (106; 206), qui dans l'état de commutation "fermé" occupe un premier état stable et dans l'état de commutation "ouvert" occupe un deuxième état stable ou métastable et peut être amené du premier au deuxième état par une pression supérieure à la valeur de seuil de pression,
- l'élément de ressort (106; 206) dans le premier état relie électriquement l'un à l'autre deux éléments de contact (103) et (105) de la liaison électrique à interrompre à la suite de la hausse de pression et dans le deuxième état est spatialement espacé d'au moins un des éléments de contact, et
- le commutateur comprend une membrane (105), à l'aide de laquelle la pression croissante peut être détectée et transmise à l'élément de ressort (106; 206), **caractérisée en ce que** l'élément de ressort (106; 206)
- présente un fond (118) avec une région de fond centrale circulaire (213) et avec une région de fond annulaire (214) disposée autour de celle-ci, qui présente un bord intérieur (216) et un bord extérieur (217), et
- le fond (118) peut être amené, par une pression sur la région de fond circulaire (213), d'un état convexe, dans lequel la région de fond circulaire (213) est disposée en dessous d'un plan défini par le bord extérieur (217) de la région de fond annulaire (214), à un état concave, dans lequel la région de fond circulaire (213) est disposée au-dessus d'un plan défini par le bord extérieur (217) de la région de fond annulaire (214), et
dans laquelle
- l'élément de ressort est réalisé à la manière d'une coupe et
- présente une paroi latérale périphérique (119; 219) et une ouverture définie par un bord libre (221) de la paroi latérale (119) et
- la paroi latérale (119; 219) est divisée par des fentes axiales (215) en segments radiaux (212a-212n), dans laquelle les segments individuels (212a-212n) reposent sur le bord extérieur (217) de la région de fond annulaire (214),
ou
- l'élément de ressort présente au lieu de la paroi latérale divisée par les fentes axiales une paroi latérale, dans laquelle les fentes axiales sont remplacées partiellement ou entièrement par des intervalles entre les segments individuels, qui sont aussi larges ou plus larges que les segments eux-mêmes,
ou
- l'élément de ressort ne présente au lieu de la paroi latérale périphérique qu'un seul des segments.

2. Batterie selon la revendication 1, **caractérisée en ce que**
- le fond (118; 218) se trouve dans l'état convexe, lorsque l'élément de ressort (106; 206) est dans le premier état stable,
et
- le fond (118; 218) se trouve dans l'état concave, lorsque l'élément de ressort (106; 206) est dans le deuxième état stable.

3. Batterie selon l'une quelconque des revendications précédentes, **caractérisée en ce que** l'élément de ressort (106; 206) présente au moins une des caractéristiques suivantes:
- une ligne d'inflexion (216) forme la limite entre les régions de fond circulaire (213) et annulaire (214),
- lorsque l'élément de ressort (106; 206) est dans le premier état, la région de fond annulaire (214) monte en direction de son bord extérieur (217),
- lorsque l'élément de ressort (106; 206) est dans le deuxième état, la région de fond annulaire (214) descend en direction de son bord extérieur (217),
- la région annulaire (214) et la paroi latérale (119; 219) forment un angle compris entre 90° et 100°, et
- lorsque l'élément de ressort (106; 206) est dans le deuxième état, l'ouverture définie par le bord (221) de la paroi latérale (119; 219) a un plus grand diamètre que dans le premier état.

4. Batterie selon l'une quelconque des revendications précédentes, **caractérisée en ce qu'**un des deux éléments de contact est la borne polaire (103), vers laquelle la liaison électrique doit être interrompue.

5. Batterie selon la revendication 4, **caractérisée en ce que**
- dans le premier état de l'élément de ressort (106; 206), une partie de la borne polaire (103) est entourée radialement par les segments de la paroi latérale (119; 219), dans laquelle au moins un des segments s'applique directement sur la borne polaire (103) et est en contact électrique avec celle-ci,
et
- dans le deuxième état de l'élément de ressort, les segments de la paroi latérale sont spatialement espacés de la borne polaire (103).

6. Batterie selon l'une quelconque des revendications précédentes, **caractérisée en ce qu'**un des deux éléments de contact est la membrane (105).

7. Batterie selon l'une quelconque des revendications précédentes, **caractérisée en ce que** la membrane (105) présente au moins une des caractéristiques suivantes:
- elle peut être amenée dans un état bombé par la hausse de pression dans l'espace intérieur avec ladite au moins une cellule individuelle,
- elle est couplée à l'élément de ressort (106; 206), de telle manière qu'en cas de bombage elle puisse exercer une pression sur la région de fond circulaire (213) de l'élément de ressort (106; 206),
- elle est reliée directement à l'élément de ressort (106; 206).

8. Batterie selon l'une quelconque des revendications 4 à 7, **caractérisée en ce que** l'élément de ressort (106; 206; 306) ainsi que la partie de la borne polaire (103), sur laquelle il existe dans le premier état un contact électrique avec l'élément de ressort (106; 206), sont disposés dans une cavité (120) à l'intérieur du boîtier ou dans une cavité à l'intérieur d'une paroi du boîtier, qui est en liaison de communication par la membrane (105) avec l'espace intérieur, dans lequel ladite au moins une cellule individuelle est disposée.

9. Batterie selon la revendication 8, **caractérisée en ce qu'**elle comprend un moyen d'aération (111), par lequel il peut se produire un équilibrage de la pression entre la cavité (120) et le côté extérieur du boîtier.
